# FASCICULE DE BREVET EUROPEEN

(11) **EP 3 699 027 B1**
(45) Date de publication et mention de la délivrance du brevet: **08.12.2021**
(21) Numéro de dépôt: 20158079.2
(22) Date de dépôt: 18.02.2020
(51) Int. Cl.: B60P 3/20

(54) **SYSTÈME DE CLOISON INTÉRIEURE D'UN ESPACE FERMÉ TEL QUE LE COMPARTIMENT DE CHARGEMENT D'UN VÉHICULE FRIGORIFIQUE**
TRENNWANDSYSTEM FÜR DEN INNENBEREICH EINES GESCHLOSSENEN RAUMS, WIE DER LADERAUM EINES KÜHLFAHRZEUGS
SYSTEM FOR PARTITION INSIDE A CLOSED SPACE SUCH AS THE LOADING COMPARTMENT OF A REFRIGERATED VEHICLE

(30) Priorité: 19.02.2019 FR 1901670
(43) Date de publication de la demande: 26.08.2020
(73) Titulaire: Pommier, 95310 Saint Ouen l'Aumone (FR)
(72) Inventeur: GUIDETTI, Stefano, 42023 CADELBOSCO DI SOPRA (IT)
(74) Mandataire: Lefevre-Groboillot, David André

(56) Documents cités:
- EP-A2- 1 190 900
- DE-A1-102015 012 454
- FR-A1- 2 976 545
- FR-A1- 3 035 835

## Description

L'invention concerne un système de cloison intérieur d'un espace fermé tel que le compartiment de chargement d'un véhicule frigorifique, divisant l'espace en deux parties et dont la cloison est suspendue à au moins un chariot déplaçable sur un rail fixé au plafond de l'espace et s'étendant perpendiculairement au plan de la cloison, de façon à pouvoir pivoter autour d'un axe du chariot entre une position verticale de séparation de l'espace et une position escamotée horizontale, sous le plafond, le système comprenant des moyens de pivotement de cloison entre ces positions de division et escamoté et de verrouillage et déverrouillage de la cloison dans ces positions.

Des systèmes de cloison de ce type pour diviser un compartiment de chargement en au moins deux parties sont déjà connus, notamment dans le domaine des véhicules frigorifiques. Ces systèmes connus présentent l'inconvénient qu'ils sont très encombrants parce que les moyens de pivotement, de verrouillage et déverrouillage sont disposés dans l'espace interne du compartiment, sur le plafond, sur la cloison et entre les deux. Un tel système encombrant est décrit dans le brevet français no 2 976 545. Le document DE 10 2015 012454 montre un système de cloison intérieure selon le préambule de la première revendication.

L'invention a pour but de pallier l'inconvénient des systèmes connus.

Pour atteindre ce but, la cloison selon l'invention est caractérisée en ce que les moyens de pivotement, de verrouillage et de déverrouillage sont intégrés dans l'épaisseur de la cloison.

Selon l'invention le chariot fait parti d'un agencement de support, qui comprend un dispositif en forme d'un bâton qui est monté pivotant sur le chariot et qui est intégré dans l'épaisseur de la cloison en s'étendant perpendiculairement à partir du bord supérieur de cette dernière et dans lequel sont disposés les moyens de verrouillage et de déverrouillage de la cloison.

Selon une autre caractéristique, ces moyens comprennent un levier coudé qui est articulé à une extrémité à un axe du chariot au-dessus de l'axe de pivotement du bâton et dont l'autre extrémité est articulée à un insert axialement mobile dans le bâton lors du pivotement de celui-ci et qui provoque lors du pivotement de la cloison de sa position horizontale sous le plafond dans sa position verticale de division, la compression d'un ressort logé dans le bâton.

Selon encore une autre caractéristique, le ressort est un ressort hélicoïdal traversé axialement par une tige dont l'extrémité adjacente au levier est fixée à l'insert et dont l'autre extrémité porte une butée coulissant dans le bâton, et en ce que le ressort prend appui par une extrémité sur une butée fixe du bâton située, près de l'insert, tandis que l'autre extrémité est en appui sur la butée coulissante, de façon que lors du pivotement du bâton vers la position verticale, le ressort soit comprimé.

Selon encore une autre caractéristique, le système comprend un dispositif de verrouillage de la cloison dans sa position verticale, qui est intégré dans l'épaisseur de la partie inférieure de la paroi.

Selon encore une autre caractéristique le rail présente une section transversale en forme d'un U, que les extrémités libres des branches latérales du U sont recourbées l'une vers l'autre pour constituer des chemins de roulement pour des galets prévus sur les faces latérales du chariot.

Selon encore une autre caractéristique le rail comporte dans sa face de base des évidements qui sont espacés dans la direction longitudinale du rail, et en ce que le chariot comprend sur sa surface supérieure un ergot de verrouillage du chariot sur le rail par engagement de l'ergot dans un évidement du rail.

Selon encore une autre caractéristique le dispositif de verrouillage comprend une partie de cadre de support destinée à être intégrée dans l'épaisseur de la cloison et un dispositif de patin déplaçable dans le cadre sous l'effet d'une poignée d'actionnement, de façon que lorsque le patin prend appui sur le fond, il se créée une force de réaction de soulèvement de la cloison.

Selon encore une autre caractéristique la cloison est verrouillable dans une position verticale par engagement de l'ergot du chariot dans un évidement du rail lorsque la cloison est soulevée lors de l'actionnement de la poignée du dispositif de verrouillage lorsque le patin prend appui sur le fond du compartiment.

Selon encore une autre caractéristique le dispositif de verrouillage comprend une fenêtre de communication des deux parties de compartiment divisé par la cloison, dans sa position verticale, et en ce que la fenêtre est fermée lorsque la poignée est dans sa position de verrouillage de la cloison dans sa position de division et ouverte lorsque la poignée est dans sa position de déverrouillage.

Selon encore une autre caractéristique la poignée est montée pivotante entre ses positions d'ouverture et de fermeture de la fenêtre et provoque le déplacement d'un piston, par l'intermédiaire d'un dispositif de biellettes, un dispositif de ressorts étant interposé dans le cadre entre le piston et le patin.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
[Fig. 1] la figure 1 est une vue en perspective illustrant schématiquement une cloison de division d'un espace tel qu'un compartiment d'un véhicule en deux parties, pourvu d'un système selon l'invention, la cloison étant montrée dans sa position verticale de division ;
[Fig. 2] la figure 2 est une vue en perspective montrant le système de cloison selon l'invention, dans sa position horizontale escamotée sous le plafond ;
[Fig. 3] la figure 3 est une vue en perspective, éclatée, d'un système de cloison selon l'invention, montrant la cloison dans sa position verticale de division de l'espace en deux parties ;
[Fig. 4] la figure 4 est une vue en perspective de l'agencement de support d'une cloison, selon l'invention ;
[Fig. 5] la figure 5 est une vue latérale de l'agencement de la figure 4 ;
[Fig. 6] la figure 6 est une vue de dessus de l'agencement de la figure 4 ;
[Fig. 7] la figure 7 est une vue en direction de la flèche VII de la figure 4 ;
[Fig. 8] la figure 8 est une vue en direction de la flèche VIII de la figure 4 ;
[Fig. 9] la figure 9 est une vue en perspective de l'agencement de la figure 4 dans la position horizontale escamotée de la cloison ;
[Fig. 10] la figure 10 est une vue de dessus de l'agencement de la figure 9 ; et
[Fig. 11]

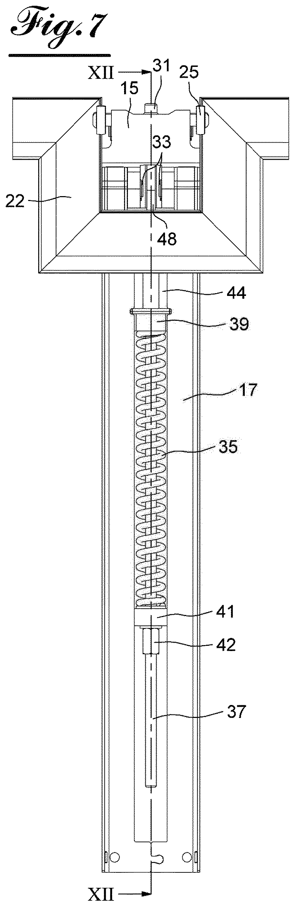

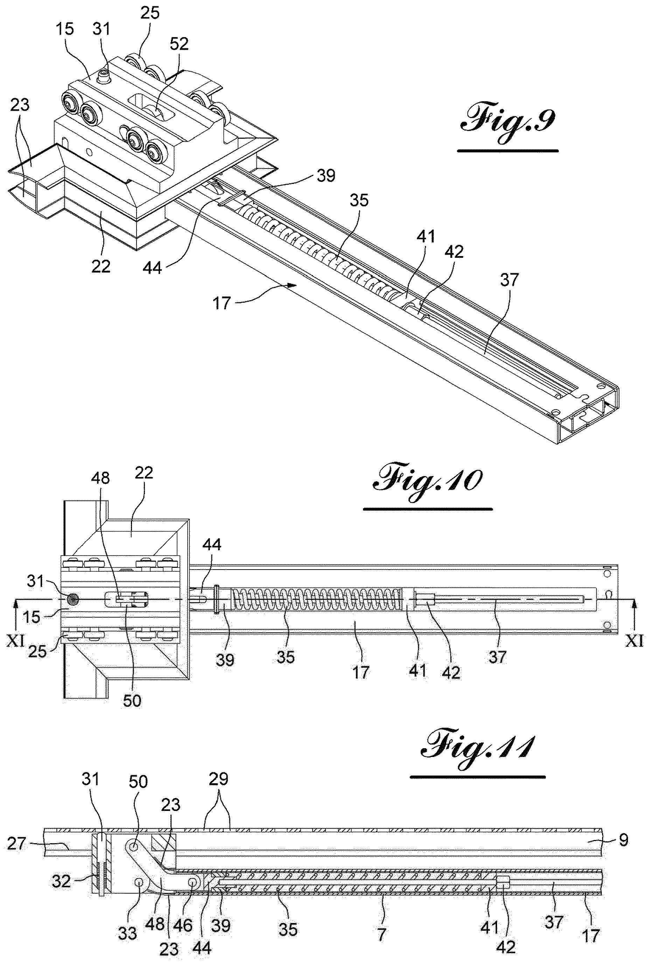

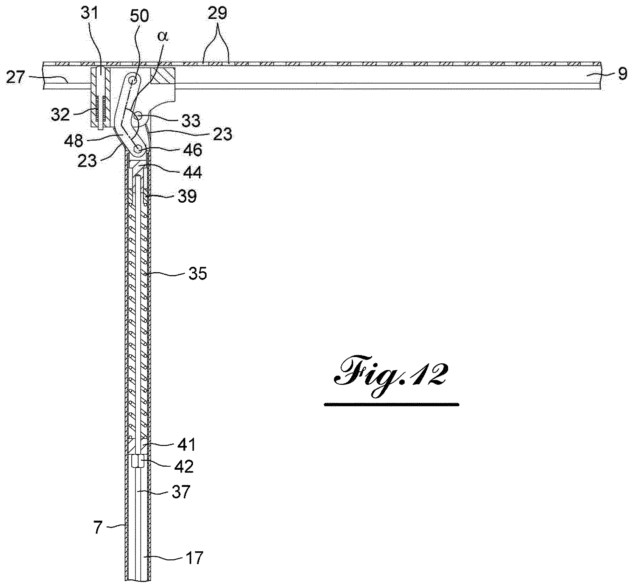

[Fig. 12] les figures 11 et 12 sont des vues en coupe suivant les lignes respectivement XII - XII de la figure 7 et XI-XI de la figure 10 ; illustrant le montage de l'agencement de support de la cloison, sur le chariot, dans les positions respectivement horizontale escamotée et verticale,

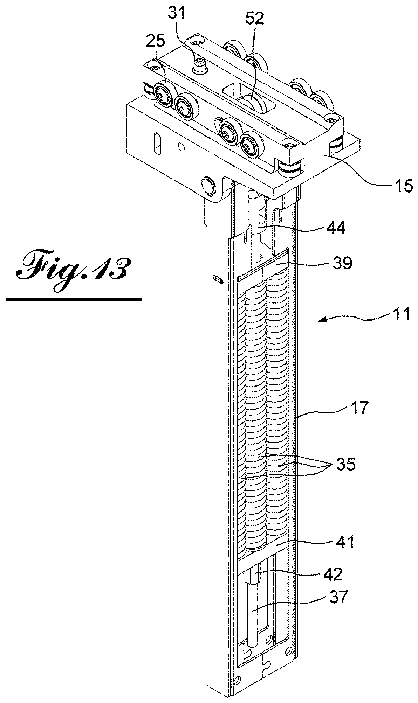

[Fig. 13] la figure 13 est une vue en perspective de l'agencement de support de cloisons, dans sa position verticale, qui montre une autre version de réalisation de l'agencement ;
[Fig. 14]

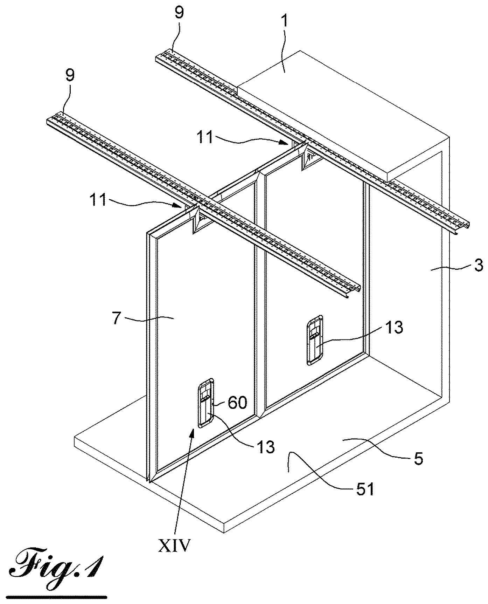

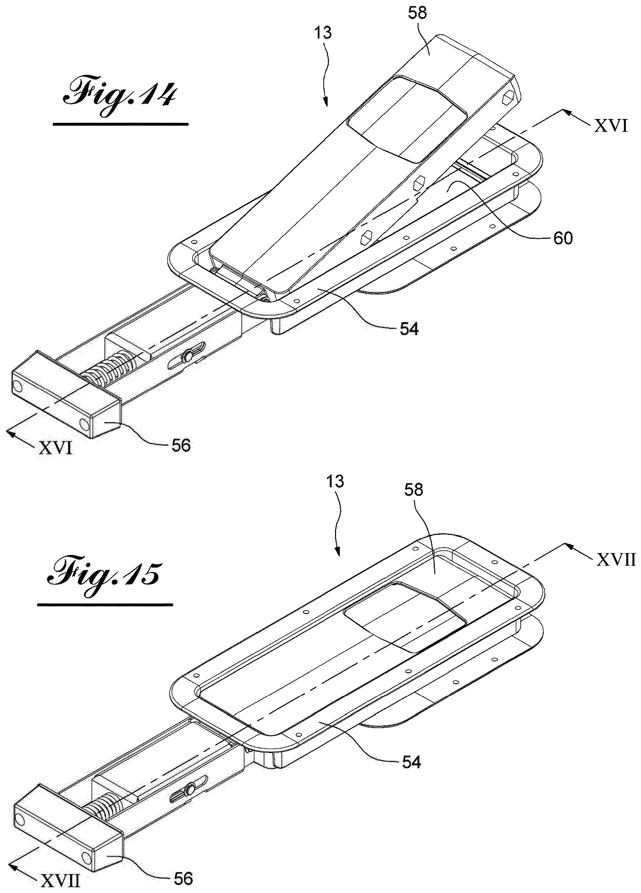

[Fig. 15] les figures 14 et 15 sont des vues en perspective, à plus grande échelle, du dispositif de verrouillage de cloison, indiqué par la flèche XIV sur la figure 1, et montrent ce dispositif dans ses positions ouverte et fermée ;
[Fig. 16]

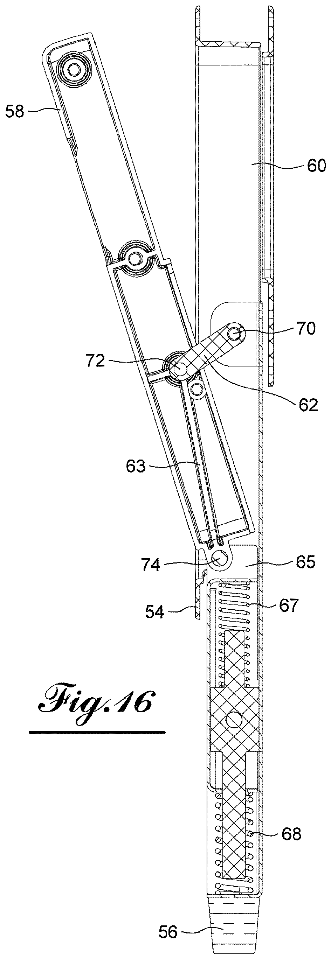

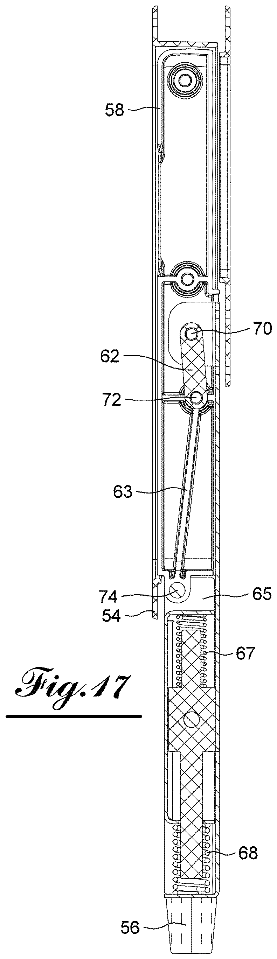

[Fig. 17] les figures 16 et 17 sont des vues en coupe du dispositif des figures 14 et 15, respectivement selon des lignes XVI-XVI de la figure 14 et XVII de la figure 15.

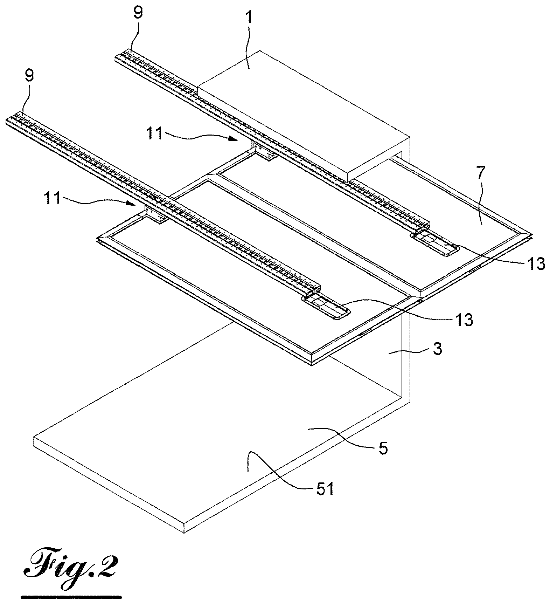

La figure 1 montre schématiquement le compartiment par exemple d'un véhicule frigorifique. Les références 1, 3 et 5 illustrent respectivement le plafond, une paroi latérale et le plancher du compartiment. Le compartiment est divisé en deux parties par la cloison 7 qui est supportée par deux rails 9 fixés sous le plafond 1, au moyen de deux agencements de support 11, chacun porté par à un rail 9. La cloison 7 peut être réalisée en une seule partie ou en deux parties chacune alors supportée par un rail. La cloison 7 est verrouillable sur le plancher 5, dans sa position verticale, par deux dispositifs de verrouillage 13 dont un pourrait être prévu pour chaque partie de cloison si celle-ci était réalisée en deux parties de cloison. La figure 2 montre la cloison de la figure 1 dans sa position horizontale escamotée sous les rails.

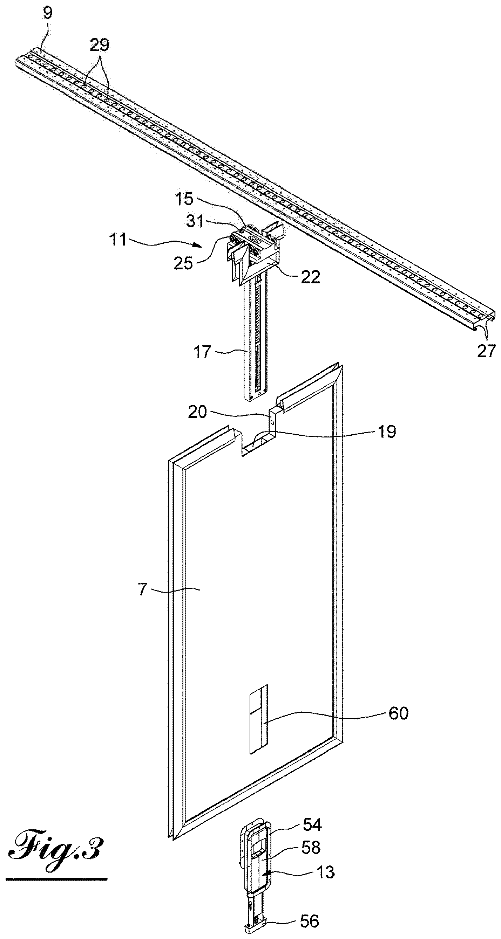

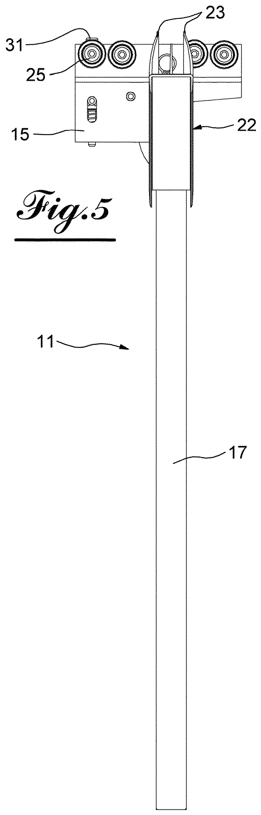

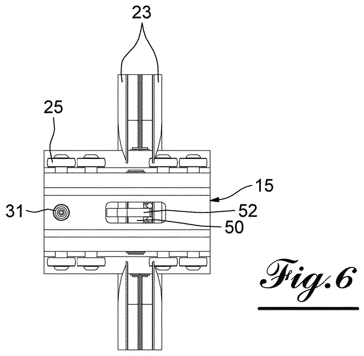

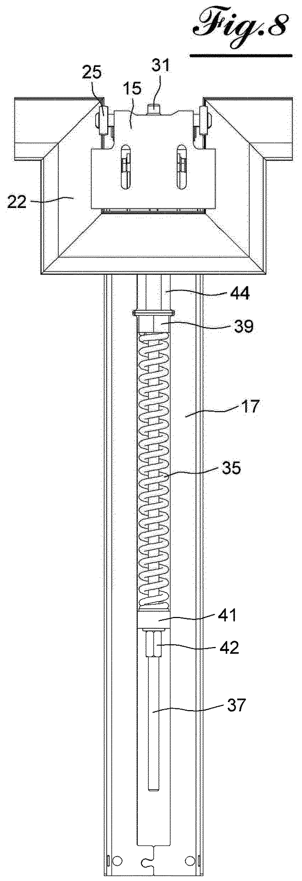

En se rapportant ci-après aux figures 3 à 11, on décrira de façon détaillée un des deux agencements de support de la figure 1, destiné au support de la cloison 7. Comme le montre les figures, l'agencement de support 11 comporte un chariot 15 sur lequel est monté un dispositif 17 porteur de la cloison 7, en forme d'un bâton, et qui comporte les moyens de pivotement et de verrouillage/déverrouillage de la cloison. Ce bâton 17 est intégré dans l'épaisseur de la cloison 7 comme l'illustre la figure éclatée 3. La paroi est fixée sur le bâton 17 en introduisant celui-ci dans l'évidement 19 pratiqué dans la cloison à partir du bord supérieur de celle-ci. Au débouché de l'évidement ou orifice 19 est prévue dans le bord supérieur une découpe 20 de réception d'un dispositif d'étanchéité 22 en forme d'une collerette d'étanchéité disposée en haut du bâton. Cette collerette d'étanchéité est configurée pour assurer l'étanchéité entre le bâton et le chariot lors du pivotement du bâton. Pour assurer sa fonction d'étanchéité, la collerette est pourvue de lèvres d'étanchéité 23 qui, lors du pivotement du bâton 17, glisse sur les parois latérales du chariot 15.

Ce chariot comporte sur ses parois latérales des galets 25 dont quatre sont prévus sur chaque côté, dans l'exemple de réalisation du chariot qui est représenté. Les galets permettent au chariot de se déplacer le long de son rail 9. A cette fin, ce rail est formé par un profilé en forme d'un U. Les extrémités des ailes latérales du U sont recourbées l'une vers l'autre pour constituer des chemins 27 de roulement des galets 25. Le rail comporte dans sa base des découpes 29 qui sont espacées les unes des autres le long de la direction longitudinale du rail et qui sont destinées à permettre le verrouillage du chariot 15 et donc de la cloison dans différentes positions dans le compartiment. Pour assurer un tel verrouillage, le chariot 15 porte sur sa face supérieure un ergot de verrouillage 31 qui est destiné à s'engager, lors du verrouillage, sous l'effet d'un ressort 32 dans l'évidement approprié 29 du rail, comme cela sera décrit plus loin.

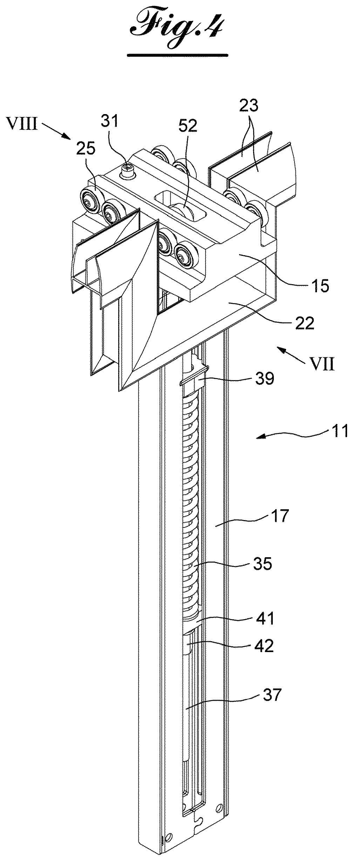

Le bâton 17 est monté sur le chariot 15, pivotant entre sa position verticale, c'est-à-dire la position verticale de la cloison 7 divisant alors le compartiment en deux parties, comme le montre par exemple la figure 4, et sa position horizontale sous le plafond, correspondant à la position horizontale escamotée de la cloison, conformément par exemple à la figure 9.

Les figures 11 à 12 illustrent la configuration du bâton et son montage sur le chariot 15. Le bâton est articulé au chariot par l'intermédiaire de l'axe de pivotement 33 que l'on voit sur les figures 11 et 12 et également sur la figure 7. On voit sur les figures 11 et 12 que le bâton formé par un profilé creux à section transversale rectangulaire loge un ressort hélicoïdal de compression 35 qui est traversé axialement par une tige 37. Le ressort prend appui, par son extrémité adjacente au chariot 15, sur une butée 39 qui est fixée à l'intérieur du bâton, et par son autre extrémité sur une butée 41 qui peut coulisser et est en appui sur un écrou 42 vissé sur l'extrémité inférieure, c'est-à-dire éloigné du chariot 15, de la tige 37, pour permettre un réglage de la position de cette butée 41. L'autre extrémité de la tige, c'est-à-dire celle adjacente au chariot 15, est fixée dans un insert 44 qui est axialement mobile dans le bâton. A cet insert est articulé en 46 un levier 48 coudé selon un angle α de par exemple de 135°, dont l'autre extrémité est montée pivotant autour d'un axe 50 sur le chariot 15. Comme le montre les figures 11 et 12, l'axe de pivotement 50 du levier 48 est situé au-dessus de l'axe de pivotement 33 du bâton de façon que, lors d'un pivotement du bâton 17 de sa position horizontale de la figure 11 dans sa position verticale de la figure 12, le pivotement du levier 48 provoque un déplacement axial de l'insert 44 et donc de la tige 37, ce qui provoque la compression du ressort 35. En effet, le déplacement de la tige oblige la butée inférieure 41 du ressort de se déplacer également, alors que l'autre butée 39 du ressort est immobile.

En comparant les figures 11 et 12 on voit bien que l'écart entre les axes d'articulation 46 du levier 48 et de l'axe de pivotement 33 du bâton, est plus faible sur la figure 12 que sur la figure 11, ce qui signifie que le ressort 37 a été comprimé lors du pivotement. Il est à noter que l'extrémité 52 du levier 48, qui est articulé en 50 au chariot 15 est visible sur la figure 9.

En d'autres termes, le ressort 35 est décompressé dans la position horizontale du bâton 17 et donc de la cloison 7, ou au moins moins comprimé que dans le cas de la figure 12. Etant donné que le pivotement de la cloison de sa position horizontale escamotée sous le plafond vers sa position verticale nécessite l'application d'une force déterminée par le ressort et réglable à l'aide de l'écrou 42, la cloison reste bloquée dans sa position escamotée.

Concernant le ressort 35, il peut être réalisé en forme d'un seul ressort ou d'une pluralité de ressorts 35 montés en parallèle, par exemple trois ressorts, comme le montre la figure 13.

Par contre, la cloison est verrouillable dans sa position verticale à l'aide du dispositif de verrouillage 13 que l'on voit sur la figure 3 et à plus grande échelle sur les figures 14 à 17, et qui est également destiné à être intégré dans l'épaisseur de la partie inférieure de la cloison. Ce dispositif comporte une partie en forme d'un cadre 54 dans lequel est monté déplaçable un patin 56 destiné à prendre appui sur le fond 5, par actionnement d'une poignée 58, de façon par ailleurs connue en soi, que lorsque le patin prend appui sur le plancher, une force de réaction est créée, qui soulève légèrement la cloison de façon que l'ergot de verrouillage 31 sur la surface supérieure du chariot 15 puisse s'engager dans la découpe appropriée 29 du rail 9 et assurer le verrouillage de la cloison. Concernant l'intégration du dispositif de verrouillage 13 dans l'épaisseur de la cloison, les figures 3 et 14 à 17 montrent la fenêtre 60 qui est découpée dans la cloison et qui permet l'actionnement de la poignée 58 lorsque le dispositif 13 est dans sa position d'intégration dans la cloison.

Mais ce dispositif de verrouillage 13 a une fonction complémentaire car elle assure la décompression de la partie de compartiment isolé, c'est-à-dire derrière la cloison. En effet, lors de la manœuvre d'ouverture de la poignée 58, qui créé la fenêtre 60, cette ouverture permet à l'air de circuler librement entre les deux parties de compartiment, à travers la paroi, et facilite ainsi le pivotement de la cloison entre ces positions verticale et horizontale.

Plus précisément, concernant le fonctionnement de la poignée, celle-ci agit par l'intermédiaire d'une biellette pivotante 62, sur un piston 65 qui est mobile dans le cadre 54 à l'encontre de deux ressorts de compression 67, 68 qui sont montés en série entre le piston et le patin 56. La biellette 62 est articulée à une extrémité au cadre en 70 et à son autre extrémité à un pivot 72 sur la poignée. Une nervure de renfort 63 est prévue sur la poignée entre le pivot 72 et le piston 65 qui porte l'axe de pivotement 74 de la poignée. En regardant les figures 16 et 17, on comprend que le mouvement de la poignée 58 de sa position d'ouverture de la fenêtre 60, de la figure 16, dans sa position selon la figure 17, les biellettes 62 et 63 sont contraintes à s'aligner , ce qui provoque la compression des ressorts 67 et 68 et donc une force sur le patin 56, d'une part, et une composante verticale de soulèvement de la cloison d'autre part.

Il ressort de la description qui précède et qui n'a été donnée qu'à titre d'exemple non limitatif de l'invention, que l'ensemble des moyens de pivotement, de verrouillage et de déverrouillage de la cloison sont intégrés dans l'épaisseur de celle-ci si bien que l'encombrement du système selon l'invention est limité à son stricte minimum. De plus, les dimensions du chariot peuvent être très faibles ; il faut seulement assurer son déplacement correcte sur son rail.

## Revendications

1. Système de cloison intérieure dans un espace fermé tel que le compartiment de chargement d'un véhicule frigorifique divisant l'espace en deux parties, et dont la cloison (7) est suspendue à au moins un chariot (15) déplaçable sur un rail (9) fixé au plafond (1) de l'espace et s'étendant perpendiculairement au plan de la cloison, de façon à pouvoir pivoter autour d'un axe (33) du chariot (15) entre une position verticale de division de l'espace et une position escamotée horizontale sous le plafond (1), le système comprenant des moyens de pivotement de la cloison (7) entre ses positions de division et escamotée et de verrouillage et déverrouillage de la cloison dans ces positions, **caractérisé en ce que** les moyens de pivotement, de verrouillage et de déverrouillage sont intégrés dans l'épaisseur de la cloison (7), le chariot (15) faisant partie d'un agencement de support (11), qui comprend un dispositif (17) en forme d'un bâton qui est monté pivotant (33) sur le chariot et qui est intégré dans l'épaisseur de la cloison (7) en s'étendant perpendiculairement à partir du bord supérieur de cette dernière et dans lequel sont disposés les moyens de verrouillage et de déverrouillage de la cloison.

2. Système selon la revendication 1, **caractérisé en ce que** ces moyens comprennent un levier coudé (48) qui est articulé à une extrémité à un axe (50) du chariot (15) au-dessus de l'axe de pivotement (33) du bâton et dont l'autre extrémité est articulée à un insert (46) axialement mobile dans le bâton lors du pivotement de celui-ci et qui provoque lors du pivotement de la cloison de sa position horizontale sous le plafond dans sa position verticale de division, la compression d'un ressort (35) logé dans le bâton (17).

3. Système selon la revendication 2, **caractérisé en ce que** le ressort (35) est un ressort hélicoïdal traversé axialement par une tige (37) dont l'extrémité adjacente au levier (48) est fixée à l'insert et dont l'autre extrémité porte une butée (41) coulissant dans le bâton, et **en ce que** le ressort (35) prend appui par une extrémité sur une butée fixe (39) du bâton située, près de l'insert (44), tandis que l'autre extrémité est en appui sur la butée coulissante (41), de façon que lors du pivotement du bâton vers la position verticale, le ressort (35) soit comprimé.

4. Système selon l'une des revendications 1 à 3, **caractérisé en ce que** le rail présente une section transversale en forme d'un U, que les extrémités libres des branches latérales du U sont recourbées l'une vers l'autre pour constituer des chemins de roulement (27) pour des galets (25) prévus sur les faces latérales du chariot (15).

5. Système selon la revendication 4, **caractérisé en ce que** le rail comporte dans sa face de base des évidements (29) qui sont espacés dans la direction longitudinale du rail, et **en ce que** le chariot (15) comprend sur sa surface supérieure un ergot (31) de verrouillage du chariot sur le rail par engagement de l'ergot dans un évidement (29) du rail.

6. Système selon l'une des revendications 1 à 5, **caractérisé en ce qu'**il comprend un dispositif (13) de verrouillage de la cloison dans sa position verticale, qui est intégré dans l'épaisseur de la partie inférieure de la paroi.

7. Système selon la revendication 6, **caractérisé en ce que** le dispositif de verrouillage (13) comprend une partie de cadre de support (54) destinée à être intégrée dans l'épaisseur de la cloison et un dispositif de patin (56) déplaçable dans le cadre (54) sous l'effet d'une poignée d'actionnement (58), de façon que lorsque le patin prend appui sur le fond, il se créée une force de réaction de soulèvement de la cloison.

8. Système selon la revendication 7, **caractérisé en ce que** la cloison (7) est verrouillable dans une position verticale par engagement de l'ergot (31) du chariot dans un évidement (29) du rail lorsque la cloison est soulevée lors de l'actionnement de la poignée (58) du dispositif de verrouillage (13) lorsque le patin (56) prend appui sur le fond du compartiment.

9. Système selon l'une des revendications 7 ou 8, **caractérisé en ce que** le dispositif de verrouillage (13) comprend une fenêtre (60) de communication des deux parties de compartiment divisé par la cloison, dans sa position verticale, et **en ce que** la fenêtre (60) est fermée lorsque la poignée (58) est dans sa position de verrouillage de la cloison dans sa position de division et ouverte lorsque la poignée est dans sa position de déverrouillage.

10. Système selon la revendication 9, **caractérisé en ce que** la poignée (58) est montée pivotante entre ses positions d'ouverture et de fermeture de la fenêtre (60) et provoque le déplacement d'un piston (65), par l'intermédiaire d'une biellette (62), un dispositif de ressorts (67, 68) étant interposé dans le cadre (54) entre le piston (65) et le patin (56).

## Patentansprüche

1. Trennwandsystem für den Innenbereich eines geschlossenen Raums wie der Laderaum eines Kühlfahrzeugs, das den Bereich in zwei Teile teilt, und dessen Trennwand (7) an mindestens einem Schlitten (15) aufgehängt ist, der an einer Schiene (9) verlagerbar ist, die an der Decke (1) des Bereichs befestigt ist und sich senkrecht zur Ebene der Trennwand derart erstreckt, dass sie um eine Achse (33) des Schlittens (15) zwischen einer vertikalen Teilungsposition des Bereichs und einer horizontal unter die Decke (1) eingezogenen Position schwenkbar ist, wobei das System Schwenkmittel der Trennwand (7) zwischen ihrer Teilungs- und eingezogenen und Verriegelungs- und Entriegelungsposition der Trennwand in diesen Positionen umfasst, **dadurch gekennzeichnet, dass** die Schwenk-, Verriegelungs- und Entriegelungsmittel in der Dicke der Trennwand (7) integriert sind, wobei der Schlitten (15) Teil einer Halteeinrichtung (11) ist, die eine Vorrichtung (17) in Form eines Stabs umfasst, der schwenkend (33) an dem Schlitten angebracht ist und der in der Dicke der Trennwand (7) integriert ist, indem er sich senkrecht ab dem oberen Rand derselben erstreckt und in dem die Verriegelungs- und Entriegelungsmittel der Trennwand angeordnet sind.

2. System nach Anspruch 1, **dadurch gekennzeichnet, dass** diese Mittel einen gekrümmten Hebel (48) umfassen, der an einem Ende an einer Achse (50) des Schlittens (15) oberhalb der Schwenkachse (33) des Stabs angelenkt ist und dessen anderes Ende an einem in dem Stab beim Schwenken desselben axial beweglichen Einsatz (46) angelenkt ist und der beim Schwenken der Trennwand aus ihrer horizontalen Position unter der Decke in ihre vertikale Teilungsposition die Kompression einer Feder (35) verursacht, die im Stab (17) untergebracht ist.

3. System nach Anspruch 2, **dadurch gekennzeichnet, dass** die Feder (35) eine Schraubenfeder ist, die axial von einer Stange (37) durchquert wird, deren Ende neben dem Hebel (48) am Einsatz befestigt ist und deren anderes Ende einen in dem Stab gleitenden Anschlag (41) trägt, und dass sich die Feder (35) mit einem Ende auf einem festen Anschlag (39) des Stabs abstützt, der sich beim Einsatz (44) befindet, wohingegen sich das andere Ende auf dem gleitenden Anschlag (41) derart abstützt, dass die Feder (35) beim Schwenken des Stabs in die vertikale Position komprimiert wird.

4. System nach einem der Ansprüche 1 bis 3, **dadurch gekennzeichnet, dass** die Schiene einen U-förmigen Querschnitt aufweist, dass die freien Enden der seitlichen Schenkel des U zueinander gekrümmt sind, um Rollwege (27) für die Rollen (25) zu bilden, die auf den seitlichen Flächen des Schlittens (15) vorgesehen sind.

5. System nach Anspruch 4, **dadurch gekennzeichnet, dass** die Schiene in ihrer Basisfläche Aussparungen (29) aufweist, die in der Längsrichtung der Schiene beabstandet sind, und dass der Schlitten (15) auf seiner oberen Oberfläche einen Verriegelungssporn (31) des Schlittens auf der Schiene durch Eingreifen des Sporns in eine Aussparung (29) der Schiene umfasst.

6. System nach einem der Ansprüche 1 bis 5, **dadurch gekennzeichnet, dass** es eine Verriegelungsvorrichtung (13) der Trennwand in ihrer vertikalen Position umfasst, die in der Dicke des unteren Teils der Wand integriert ist.

7. System nach Anspruch 6, **dadurch gekennzeichnet, dass** die Verriegelungsvorrichtung (13) einen Halterahmenteil (54) umfasst, der bestimmt ist, in der Dicke der Trennwand integriert zu sein, und eine Kufenvorrichtung (56), die in dem Rahmen (54) unter der Wirkung eines Betätigungsgriffs (58) derart verlagerbar ist, dass, wenn sich die Kufe auf dem Boden abstützt, eine Reaktionskraft erzeugt wird, die die Trennwand anhebt.

8. System nach Anspruch 7, **dadurch gekennzeichnet, dass** die Trennwand (7) in einer vertikalen Position durch Eingreifen des Sporns (31) des Schlittens in eine Aussparung (29) der Schiene verriegelbar ist, wenn die Trennwand bei der Betätigung des Griffs (58) der Verriegelungsvorrichtung (13) angehoben ist, wenn sich die Kufe (56) auf dem Boden des Raums abstützt.

9. System nach einem der Ansprüche 7 oder 8, **dadurch gekennzeichnet, dass** die Verriegelungsvorrichtung (13) ein Kommunikationsfenster (60) der beiden Raumteile umfasst, die von der Trennwand in ihrer vertikalen Position getrennt sind, und dass das Fenster (60) geschlossen ist, wenn der Griff (58) in seiner Verriegelungsposition der Trennwand in ihrer Teilungsposition ist und geöffnet, wenn der Griff in seiner Entriegelungsposition ist.

10. System nach Anspruch 9, **dadurch gekennzeichnet, dass** der Griff (58) zwischen seiner Öffnungs- und Verschlussposition des Fensters (60) schwenkbar angebracht ist und die Verlagerung eines Kolbens (65) über einen Schwingarm (62) bewirkt, wobei eine Federvorrichtung (67, 68) im Rahmen (54) zwischen dem Kolben (65) und der Kufe (56) angeordnet ist.

## Claims

1. A system for partition inside a closed space such as the loading compartment of a refrigerated vehicle dividing the space into two parts, and the partition (7) of which is suspended from at least one carriage (15) movable on a rail (9) attached to the ceiling (1) of the space and extending perpendicularly to the plane of the partition, so as to be able to pivot about an axis (33) of the carriage (15) between a vertical position dividing the space and a horizontal retracted position under the ceiling (1), the system comprising means for pivoting the partition (7) between its dividing and retracted positions and for locking and unlocking the partition in these positions, **characterized in that** the pivoting, locking and unlocking means are integrated into the thickness of the partition (7), the carriage (15) being part of a support arrangement (11), which comprises a device (17) in stick form which is mounted pivoting (33) on the carriage and which is integrated into the thickness of the partition (7) while extending perpendicularly from the upper edge of the latter and in which the means for locking and unlocking the partition are arranged.

2. The system according to claim 1, **characterized in that** these means comprise a bent lever (48) that is articulated at one end to an axis (50) of the carriage (15) above the pivot axis (33) of the stick and the other end of which is articulated to an insert (46) that is axially movable in the stick during the pivoting thereof and which causes, during the pivoting of the partition from its horizontal position below the ceiling to its vertical division position, the compression of a spring (35) housed in the stick (17).

3. The system according to claim 2, **characterized in that** the spring (35) is a helical spring passed axially through by a rod (37), the end of which adjacent to the lever (48) is attached to the insert and the other end of which bears a stop (41) sliding in the stick, and **in that** the spring (35) bears by one end on a stationary stop (39) of the stick located close to the insert (44), while the other end bears on the sliding stop (41), such that during the pivoting of the stick toward the vertical position, the spring (35) is compressed.

4. The system according to one of claims 1 to 3, **characterized in that** the rail has a U-shaped cross-section, that the free ends of the lateral branches of the U are curved toward one another to constitute rolling paths (27) for rollers (25) provided on the lateral faces of the carriage (15).

5. The system according to claim 4, **characterized in that** the rail includes, in its base face, recesses (29) that are spaced apart in the longitudinal direction of the rail, and **in that** the carriage (15) comprises, on its upper face, a lug (31) for locking the carriage on the rail by engaging the lug in a recess (29) of the rail.

6. The system according to one of claims 1 to 5, **characterized in that** it comprises a device (13) for locking the partition in its vertical position, which is integrated into the thickness of the lower part of the wall.

7. The system according to claim 6, **characterized in that** the locking device (13) comprises a support frame part (54) intended to be integrated into the thickness of the partition and a shoe device (56) movable in the frame (54) under the effect of an actuating handle (58), such that when the shoe bears on the bottom, a reaction force is created lifting the partition.

8. The system according to claim 7, **characterized in that** the partition (7) is lockable in a vertical position by engagement of the lug (31) of the carriage in a recess (29) of the rail when the partition is lifted during the actuation of the handle (58) of the locking device (13) when the shoe (56) bears on the bottom of the compartment.

9. The system according to one of claims 7 or 8, **characterized in that** the locking device (13) comprises a window (60) for communication of the two compartment parts divided by the partition, in its vertical position, and **in that** the window (60) is closed when the handle (58) is in its locked position of the partition in its division position and open when the handle is in its unlocked position.

10. The system according to claim 9, **characterized in that** the handle (58) is mounted pivoting between its open and closed positions of the window (60) and causes a piston (65) to move, by means of a connecting rod (62), a spring device (67, 68) being inserted into the frame (54) between the piston (65) and the shoe (56).
